# EUROPEAN PATENT SPECIFICATION

(11) **EP 4 234 827 B1**
(45) Date of publication and mention of the grant of the patent: **09.12.2026**
(21) Application number: 23179954.5
(22) Date of filing: 11.03.2020
(51) Int. Cl.: E04B 1/41

(54) **CAST-IN PLACE ANCHOR WITH LOCKABLE JAW ASSEMBLY**
VOR ORT GEFORMTER ANKER MIT VERRIEGELBARER BACKENANORDNUNG
ANCRAGE COULÉ SUR PLACE AVEC ENSEMBLE MÂCHOIRE VERROUILLABLE

(30) Priority: 12.04.2019 US 201962833024 P; 24.02.2020 US 202016798849
(43) Date of publication of application: 30.08.2023
(62) Document number(s) of the earlier application(s) in accordance with Art. 76 EPC: 20162307.1 / 3 722 526
(73) Proprietor: Black & Decker Inc., New Britain, CT 06053 (US)
(72) Inventor: CHRISTOPHERSEN, Kyle, Lutherville-Timonium, Maryland 21093 (US); SEROKOSZ, Mark J., New Fairfield, Connecticut 06810 (US); RIVERA, Wander, Danbury, Connecticut 06810 (US); LaBARBERA, Robert, New Rochelle, New York 10801 (US); ZHANG, Qiang, Lutherville-Timonium, Maryland 21093 (US)
(74) Representative: Slingsby Partners LLP

(56) References cited:
- US-A1- 2016 326 738
- US-A1- 2018 298 938

## Description

### Field

This specification relates to a cast-in-place anchor assembly for connecting objects to a metal deck or wood form after concrete pouring and concrete setting.

### Background

The WoodKnocker^{®} II and Bang-It ^{®} + products are cast-in-place anchor assemblies available for purchase and aspects of the present invention are conceived to improve upon this product. In the recent past Applicant has filed patent applications with subject matter generally related to the present application. U.S. Patent Application No. 16/002,099, filed June 7, 2018, and entitled Cast-In Place Anchor Assembly covers a cast-in place anchor. In addition, U.S. Patent Application No. 15/923,052, filed on March 16, 2018, and entitled Snap Nut Concrete Anchor Assembly also covers a cast-in-place-anchor. Furthermore, U.S. Patent Application No. 15/948,131, filed on April 9, 2018, and entitled Snap Nut Concrete Anchor Assembly also covers a cast-in-place-anchor.

There are two different conventional types of cast-in-place anchors. A first type is secured in position adjacent to a wooden concrete forming boundary and a second type secures is secured in position adjacent to metal decking (e.g., floor slab metal decking). After concrete pouring and setting each of these two types of cast-in-place anchors provide an anchoring point to which an object (e.g., a threaded rod) can be anchored. Both types of anchor include an anchor housing (which transfers load to the concrete) and a jaw assembly arranged in the anchor housing. After securing a threaded rod within the jaws of a set anchor assembly, load applied to the threaded rod can be transferred to the jaws of the jaw assembly which in turn transfer load to the anchor housing. The anchor housing may include a flange which is ultimately embeddes in the cured concrete and which helps to transfer load from the anchor housing to the cured concrete.

In both types of conventional cast-in-place anchors discussed above, the anchors provide an anchoring point adjacent to the metal decking or to the wood form. Specifically, the anchoring point may be an insertion opening of the anchor which is positioned adjacent the metal decking or wood form. After setting, an anchor member (e.g., a threaded rod) may be inserted through/into the insertion opening to the jaw assembly which (as mentioned above) is housed within the anchor housing. As the anchor member is inserted, the jaw assembly engages the anchor member to secure the anchor member to the anchor and thereby to the cured concrete.

Conventional split nut jaw assemblies will often employ a spring above the jaws and downwardly biasing the jaws. The spring also allows the jaws to be urged at least slightly upward during insertion of the anchor member. The axial positioning flexibility of the jaws enhances the engagement process by affording the jaws significant compliance flexibility. Unfortunately, in certain load scenarios the axial up and down play could work to compromise the connection between the jaws and the anchor member.

In a seismic event or other vibratory circumstances such as copious fluid discharge, the concrete may be thrust up and down by forces having components along the axial/longitudinal direction of the anchor. In that case, a load supported on a threaded anchor member (e.g., plumbing piping suspended from a ceiling) may exert a dynamic reactionary force on the jaw assembly of the anchor housing. For example, the load being supported by the threaded anchor could apply a reverse longitudinal/axial impact force to the jaws. In a seismic event, if the jaws are able to move axially within and relative to the anchor housing, the jaws could be forced into impact engagement with upper and lower limits of the anchor housing. This impact engagement could compromise the connection between the jaws and anchor member resulting in a failed jaw/anchor member connection. Specifically, if the jaw assembly design is one of a split nut design, dynamic impacts could cause the threaded jaws to separate, fatigue, shear threads and lose hold of the anchor member (e.g., threaded rod). One solution to preventing the jaws from moving relative to the anchor housing is to include a washer and a nut on the threaded rod so that the washer is adjacent the lower surface of the metal decking or adjacent to the concrete (after wood form removal) and the nut is threaded onto the rod adjacent to the washer. With this arrangement, any upward load from the threaded rod gets transferred to the nut then to the washer and then to the metal decking or wood form and cured concrete slab. The load is not transferred through the jaws.

US2016326738A1 relates to an anchor particularly adapted to be embedded into a concrete construction for suspension of a ceiling panel, duct or the like, which includes a base which receives inserts that have an axial threaded bore. The base is open at its lower end and can receive a threaded rod by virtue of ratcheting inserts received within the base. The inserts and base are particularly shaped to prevent jam and ease of insertion of the rod in the anchor. The anchor also has a head flange that sits above a plurality of fasteners secured to the anchor which is used to simultaneously drive the fasteners into a form for the concrete member. The fasteners are connected to the anchor extending in generally parallel and spaced relation to the anchor. The fasteners can be held by a support or sleeve-like holder which surrounds at least a portion of the base of the anchor or they can be attached to the base of the anchor. The fasteners project downwardly through the bottom of the anchor for driving into the form board.

### Summary

According to the present invention there is provided a cast-in-place anchor assembly of claim 1.

### Brief Description of the Drawings

Embodiments will now be described by way of non-limiting example with reference to the accompanying drawings in which:
Fig. 1A is a side cross-sectional view of a first embodiment of an anchor assembly in an unlocked or pre-set configuration;
Fig. 1B is a side cross-sectional view of the anchor assembly of Fig. 1A in a locked or set configuration;
Figs. 2 is an exploded bottom perspective view of the anchor assembly of Fig. 1A.
Fig. 3A is a side cross-sectional view of a second embodiment of an anchor assembly in an unlocked or pre-set configuration;
Fig. 3B is a side cross-sectional view of the anchor assembly of Fig. 3A in a locked or post-set configuration;
Fig. 4A discloses a side view of a first half of the split jaw assembly of Figs. 1A and 2A.
Fig. 4B discloses a side view of a second half of the split jaw assembly of Figs. 1A and 2A.
Fig. 5A discloses a bottom view of the jaw half of Figure 4A.
Fig. 5B discloses a bottom view of the jaw half of Figure 4B.
Fig. 6 shows a bottom view of the anchor assembly of Fig. 1A and 2A.
Fig. 7 shows an enlarged partial side cross-sectional view of the jaw member of Fig. 1A engaged with a threaded engagement member.

### Detailed Description

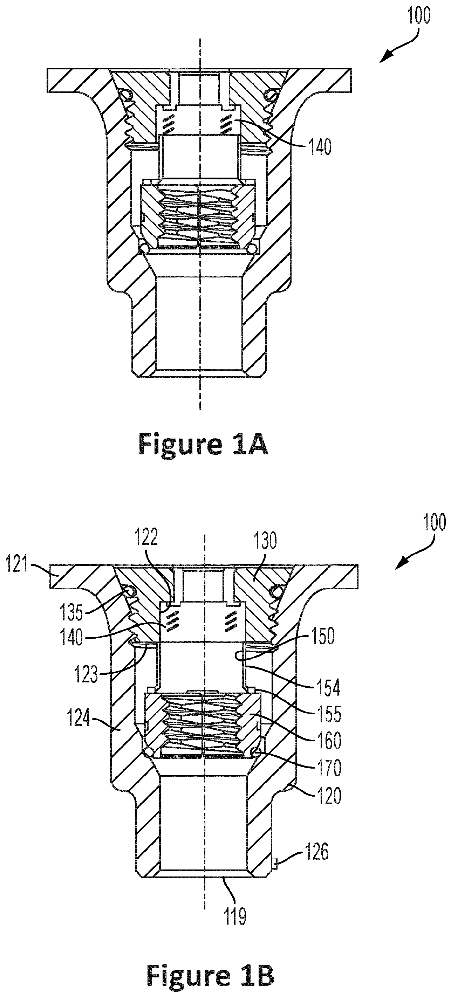

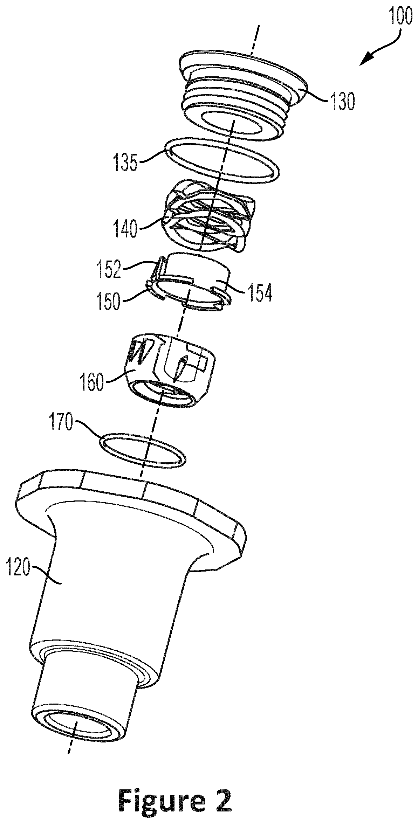

A first embodiment of an anchor assembly for a cast-in-place metal deck or a cast-in-place wood form for constraining a threaded anchor member to the cast concrete is illustrated in Figs. 1A and 1B and 2. Anchor assembly **100** includes an anchor housing **120,** a cover **130,** and an o-ring **135** (e.g., rubber or flexible o-ring) for sealing between anchor housing **120** and cover **130.** Anchor housing **120** and cover **130** define a cavity which houses a jaw assembly. The jaw assembly includes a spring **140,** a lock member **150** separable jaws **160** and a compressible member such as a flexible (e.g. rubber) o-ring or a jaw-ring **170.**

Anchor housing **120** may be made of metal or other suitable material depending on the application and required anchor assembly strength. Anchor housing **120** may include an outwardly extending radial flange **121** at an upper end thereof. At a lower end, anchor housing **120** may also include an opening **119** therein along a longitudinal axis thereof for receiving an elongate load bearing member (e.g., a threaded rod). On the anchor housing **120** at a lower end of the jaw assembly cavity is a well known tapered surface which directs separable jaws **160** together as spring **140** urges separable jaws **160** downward.

Lock member **150** may include an axially extending cylindrical wall **154** with an outwardly extending flange **155** at a bottom thereof extending from cylindrical wall **154.** An expansion slot **152** is disposed axially through the lock member from top to bottom of the lock member **150** so that edges of the walls **154** that define slot **152** may be flexibly forced toward and away from each other. As the edges move closer and away from each other, cylindrical wall **154** assumes various radial sizes (i.e., diameters).

Cover **130** may be male threaded and may be threadably received into female threads in an inner upper surface of the anchor housing. O-ring **135** may be flexible and may be seated in a ring slot in cover **130.** When cover **130** is threaded onto an upper portion of anchor housing **120,** o-ring **135** is compressed between cover **150** and a sealing surface of anchor housing **120** to prevent ingress of concrete particles which would enter the jaw assembly.

When assembly **100** is assembled as shown in Figs. 1A and 1B, jaw-ring **170** is set in a jaw slot on a lower inclined/tapered surface of anchor housing **120.** Lower ends of separable jaws **160** are then slid together along the tapered surface and interlocked to form a central threaded passage. Bottom ends of separable threaded jaws **160** rest on top of jaw-ring **170** so that a downward force applied to separable jaws **160** may displace separable jaws **160** further toward the tapered surfaces against the compressed bias force of jaw-ring **170.** A lower portion of lock member **150** may sit adjacent to or on top of separable jaws **160.**

Anchor **100** may take two configurations. In a first pre-set configuration of anchor assembly **100** shown in Fig. 1A, an axially extending outer surface of cylindrical wall **154** of lock member **150** fits within an axially extending inner wall **122** of cover **130.** At a lower end of axially extending inner wall **122,** is a horizontal ledge **123.** Ledge **123** may extend radially outward to an inner axially extending wall of anchor housing **120.**

A lower end of spring **140** engages an upper end of lock member **150.** An upper end of spring 140 engages a lower surface of cover **130.** When spring **140** is compressed between cover **130** and lock member **150,** it forces/urges an upper extremity of lock member **150** toward ledge **123.** During assembly (as discussed above) edges of lock member may be flexibly squeezed together to reduce the diameter of cylindrical wall **154** until wall **154** is reduced to a diameter smaller than axially extending inner wall **122** of cover **130.** Wall **154** of lock member **150** can then be positioned in cover **130** and slide axially within cover **130.**

When the jaw assembly is at rest in the unlocked configuration of Fig. 1A, the wall **154** expands radially into engagement with cover **130.** To reconfigure anchor assembly **100** into the second post-set configuration shown in Fig. 1B, a topmost extent of cylindrical wall **154** of lock member **150** must pass below, or clear ledge **123** as lock member **150** is urged downward toward separable jaws **160.** During assembly of the anchor member into an installed anchor, the anchor member, is inserted into opening **119** until it fully engages with separable jaws **160.** After locking engagement between jaws **160** and anchor member is achieved, a downward load can be applied to the anchor member and then transferred to the jaws **160** to place a downward force on the jaws **160.** As mentioned above, a sufficient downward force on the jaws will cause jaws **160** to move closer to inclined ramps of anchor housing **120,** compressing flexible jaw-ring **170.** The axial distance of compression of jaw-ring **170** is sufficient to lower the top of cylindrical wall **154** of lock member **150** below ledge **123.** When the upper end of lock member **150** clears ledge **123** it flexes radially outward and expands to a configuration that is larger than the ledge opening in cover **130.** The diameter formed by wall **154** is larger than the diameter of ledge **123.** Therefore, a top of wall **154** abuts a horizontal surface of ledge **123** to prevent lock member **150** from moving upward axially. In other words, jaw-ring **170** flexibly pushes a bottom of separable jaws upward, separable jaws engage a bottom of lock member **150,** and a top of lock member **150** is constrained from moving upward by ledge **123** of cover **130.** Separable jaws **160** are therefor trapped between lock member **150** and flexible jaw-ring **170.**

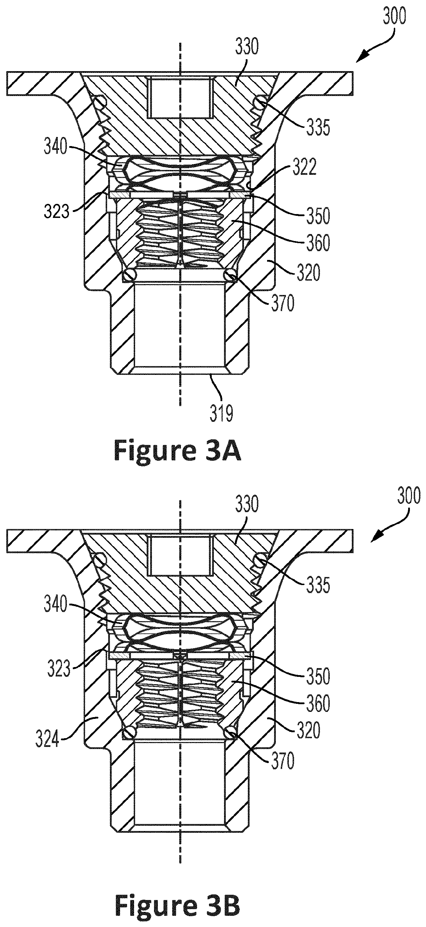

Fig. 3A shows a second embodiment of Figs. 1A and 1B. The main difference between the embodiments being the structure of the locking member. Otherwise, things work generally similarly with Figs. 3A and 3B including reference numbers in the **300** series as compared to the **100** hundred series numbers in Figs. 1A and 1B. Specifically, a locking member of Figs. 3A and 3B is disk shaped as compared to the cylindrical shaped lock member of Figs. 1A and 1B. Figs. 3A and 3B show a lock member **350** which is flexible (e.g., metal or plastic) and includes an axial through gap. Lock member **350** is similar to lock member **150** in that it can be radially compressed, reducing the gap size, to reduce the general diameter of the disk-shaped lock **350.** In Figs. 3A and 3B, a ledge **323** (similar in structure and function to the ledge **123** in Figs. 1A and 1B) is formed in a side wall of anchor housing **320.**

In a first pre-set configuration, lock member **350** is compressed to a smaller diameter than its at rest diameter and positioned within an axially extending inner wall **322** of anchor housing **320.** The at rest diameter of lock member **350** is at least slightly larger than the diameter of inner wall **322** so that after compression and release, lock member **350** flexes outward into engagement with inner wall **322.**

Lock member **350** is reconfigured from it first pre-set configuration to its second set configuration, in a similar way as lock member **150.** Specifically, when an anchor member (e.g., a threaded rod) is inserted into opening **319** and then into engagement with separable jaws **360,** separable jaws **360** securely engage the anchor member with spring **340** biasing the jaws together as described in Applicant's above prior applications. The separable jaws **360** and the anchor member are now locked together axially. A downward force on the anchor member results in a downward force on separable jaws **360** which compresses flexible jaw-ring **370** and lowers separable jaws **360.** With the lowering of separable jaws, spring **340** urges lock member **350** downward. The distance separable jaws **360** is lowered sufficient or just sufficient for lock member **350** to clear ledge **323** and expend below ledge **323** preventing a further raising of lock member **350** past ledge **323.** Upon release of the anchor member, a now compressed jaw-ring **370** reacts to urge separable jaws **360** upward into engagement with lock member **350.** Lock member **350** in turn engages ledge **323** to axially and compressibly lock separable jaws **360** between lock member **350** and jaw-ring **370.**

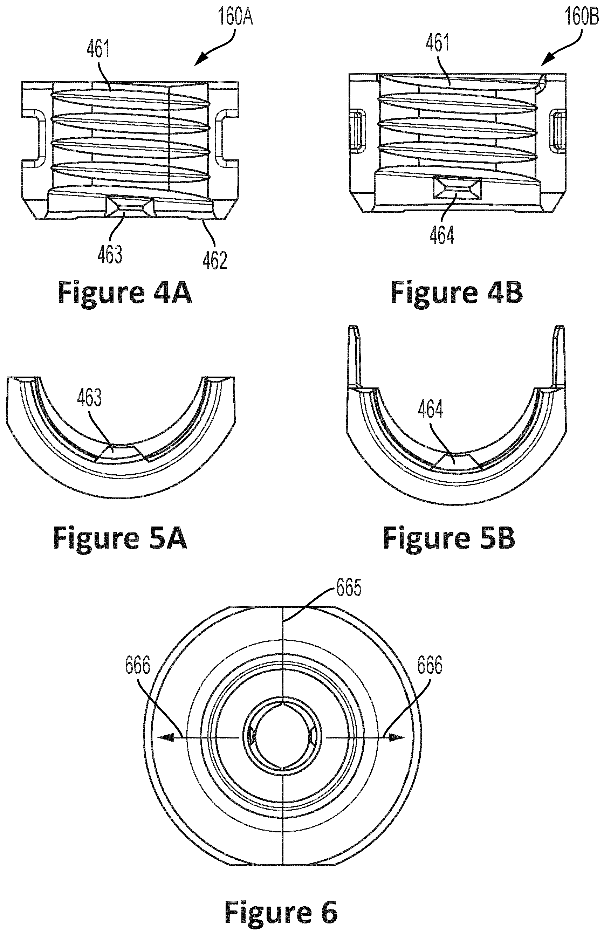

Figs. 4A, 4B, 5A and 5B show separable jaws 160A, 160B. Separable jaws **360** include female or internal threads **461** and a lower end **462.** Ribs **463, 464** are provided for enhancing the insertion operation of the anchor member into the separable jaws **360** and are shown at respective lower ends **462** of each jaw halves. Separable jaws **160A** and **160B** are able to move independently, but they must remain generally aligned in order to achieve the final and secure locking engagement with the anchor member. As the anchor member is inserted into opening **319,** the leading end of the anchor member engages a lower end **462** of one or both of the separable jaws **360.** That engagement is sometimes inefficient. Specifically, it would be beneficial if the anchor member leading end forced lower ends of each jaw member radially outward. It turns out that the closer the anchor member engagement is to the separation plane **665** of separable jaws **360,** the less that force results in the desired jaw separation. On the other hand, the farther away from that separation plane **665** the anchor member engagement occurs, the higher the desired separation forces are in the separation direction as shown by separation arrows **666** (See Fig.6).

To increase the chances that anchor member insertion will result in desirable jaw separation, ribs **463, 464** are provided at lower ends **462** of separable jaws **360** at a position furthest away or distal from separation plane **665.** A positioning of ribs **463, 464** near or within 15° in either direction of that distal position may work satisfactorily also. Ribs **463, 464** may include a tapered engagement face which has a lessening radius in a direction from the lower end **462** to the opposite end of the jaw **360.**

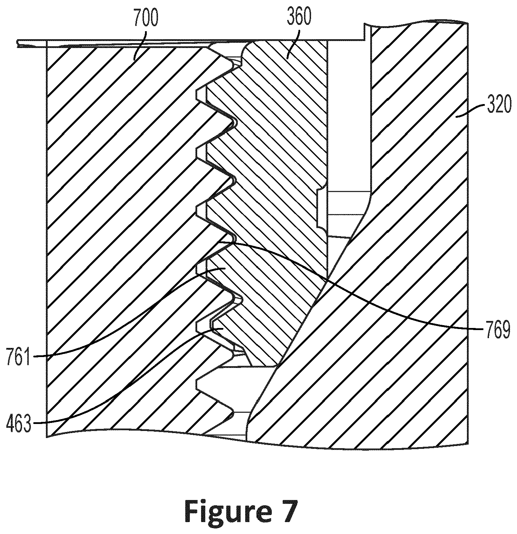

Fig. 7 shows a partial cross-sectional side view of an anchor member **700** inserted into separable jaws **360.** This cross-sectional view through the jaws **360** is in a plane through ribs **464, 463** and perpendicular to separation plane **665.** Rib **464** is positioned on jaw **360** at a central position and between threads **761** and lower jaw end **462.** The crest of rib **463** may extend radially inward to a lesser extent than the crests **761of** the threads of separable jaws **360.** Therefore, an anchor member **700** inserted into opening **319** first engages ribs **463, 464** to separate a lower end of jaws **360** before the threads **761** of those jaws **360** are biased back into engagement with the threads of the anchor member **769.**

It will be appreciated that whilst various aspects and embodiments have heretofore been described, the scope of the present invention is not limited thereto and instead extends to encompass all arrangements, and modifications and alterations thereto, which fall within the scope of the appended claim.

## Claims

1. A cast-in-place anchor assembly (300) for anchoring objects to a concrete structure after concrete pouring and concrete setting, the objects fastened to an elongated load bearing member which is connectable to the anchor assembly, the cast-in-place anchor assembly (300) comprising:
an anchor housing (320), the anchor housing (320) including an opening (319) therein along a longitudinal axis thereof for receiving the elongate load bearing member, the anchor housing (320) also including a jaw assembly housed in the anchor assembly (300), the jaw assembly for lockingly engaging and axially constraining the elongate load bearing member relative to the anchor housing (320),
the jaw assembly including separable jaws (360) and a bias member for biasing the jaws (360) toward each other, **characterised in that** the separable jaws (360) each include a rib (463, 464) at a lower end (462) of the separable jaws (360) , the ribs having an inclined surface configured such that when the elongate load bearing member is inserted into the opening (319) along the longitudinal axis it engages the inclined surface of the ribs (463, 464) to urge lower ends (462) of the jaws (360) radially outward.

## Patentansprüche

1. Vor Ort geformte Ankeranordnung (300) zum Verankern von Objekten an einer Betonstruktur nach dem Vergießen von Beton und Abbinden von Beton, wobei die Objekte an einem länglichen lasttragenden Element befestigt sind, das mit der Ankeranordnung verbindbar ist, wobei die vor Ort geformte Ankeranordnung (300) Folgendes umfasst:
ein Ankergehäuse (320), wobei das Ankergehäuse (320) eine Öffnung (319) darin entlang einer Längsachse davon zum Aufnehmen des länglichen lasttragenden Elements enthält, wobei das Ankergehäuse (320) auch eine Backenanordnung enthält, die in der Ankeranordnung (300) untergebracht ist, wobei die Backenanordnung zum verriegelnden Eingreifen und axialen Einschränken des länglichen lasttragenden Elements relativ zu dem Ankergehäuse (320) dient,
wobei die Backenanordnung trennbare Backen (360) und ein Vorspannelement zum Vorspannen der Backen (360) zueinander enthält, **dadurch gekennzeichnet, dass** die trennbaren Backen (360) jeweils eine Rippe (463, 464) an einem unteren Ende (462) der trennbaren Backen (360) enthalten,
wobei die Rippen eine geneigte Oberfläche aufweisen, die so konfiguriert ist, dass, wenn das längliche lasttragende Element entlang der Längsachse in die Öffnung (319) eingeführt wird, es in die geneigte Oberfläche der Rippen (463, 464) eingreift, um untere Enden (462) der Backen (360) radial nach außen zu drücken.

## Revendications

1. Ensemble d'ancrage coulé sur place (300) pour ancrer des objets à une structure en béton après le versement du béton et la prise du béton, les objets étant fixés à un élément porteur allongé qui peut être relié à l'ensemble d'ancrage, l'ensemble d'ancrage coulé sur place (300) comprenant :
un boîtier d'ancrage (320), le boîtier d'ancrage (320) comprenant une ouverture (319) le long d'un axe longitudinal de celui-ci pour recevoir l'élément porteur allongé, le boîtier d'ancrage (320) comprenant également un ensemble mâchoires logé dans l'ensemble d'ancrage (300), l'ensemble mâchoire étant pour venir en prise de manière verrouillable avec, et contraindre axialement, l'élément porteur allongé par rapport au boîtier d'ancrage (320),
l'ensemble mâchoire comprenant des mâchoires séparables (360) et un élément de sollicitation pour solliciter les mâchoires (360) l'une vers l'autre, **caractérisé en ce que** les mâchoires séparables (360) comprennent chacune une nervure (463, 464) à une extrémité inférieure (462) des mâchoires séparables (360), les nervures présentant une surface inclinée conçue de sorte que, lorsque l'élément porteur allongé est inséré dans l'ouverture (319) le long de l'axe longitudinal, il vienne en contact avec la surface inclinée des nervures (463, 464) pour pousser les extrémités inférieures (462) des mâchoires (360) radialement vers l'extérieur.
